Europäisches Patentamt

European Patent Office

Office européen des brevets

(11) Publication number : **0 478 334 A2**

# (12) EUROPEAN PATENT APPLICATION

(21) Application number : **91308811.8**

(51) Int. Cl.⁵ : **H04N 1/00**

(22) Date of filing : **27.09.91**

(30) Priority : **28.09.90 US 590414**

(43) Date of publication of application :
**01.04.92 Bulletin 92/14**

(84) Designated Contracting States :
**DE FR GB**

(71) Applicant : **XEROX CORPORATION**
**Xerox Square**
**Rochester New York 14644 (US)**

(72) Inventor : **Holt, Charles P.**
**3223 Lake Road**
**Williamson, New York, 14589 (US)**

(74) Representative : **Johnson, Reginald George et al**
**Rank Xerox Patent Department, Albion House,**
**55 New Oxford Street**
**London WC1A 1BS (GB)**

(54) **System reprographic architecture.**

(57)   A core system reprographic architecture (10) including a processor (15), user interface (40), system file (30), and font source (50) enabling other reprographic architectures to be created without the need to change the core system.

EP 0 478 334 A2

**FIG. 1**

The invention relates to a system reprographic architecture, and more particularly, to a system reprographic architecture from which other reprographics architectures and systems having different features and uses can be built in a cost effective manner.

In the design and manufacture of reprographic systems, various factors interplay to affect the success or failure of the system. One particular and important factor is cost, since the system must be cost effective if both the system manufacturer and customer are to profit from the system's sale and use. An additional and related factor is time, i.e., the time required to create and produce a reprographic system with features designed to meet and satisfy various customer demands and applications. As will be understood, this need to provide a cost effective range of systems tends to increase cost and development time, since normally each design is different and tailored to the ofttimes divergent requirements imposed by different customer classes. In this respect, it clearly would be highly advantageous if a family of reprographic systems could be readily spun off of a single basic design without the need to change either the basic apparatus or the operating software therefor.

In the prior art, there are numerous patents on the subject of systems. For example, U.S. Patent No. 4,918,588 to Barrett et al discloses an office automation system with scanner, camera, optical character recognition means, printer, disk storage, computer, image traffic controllers and telecommunication lines for integrated image management. And, U.S. Patent No. 4,190,350 to Donohue et al, discloses a distributed system for a copier/duplicator with master controller and plural area controllers, one or more of which is smart. Further, there are prior art disclosures to various terminal configurations such as U.S. Patent No. 4,587,633 to Wang et al which discloses a management communication terminal system with scanning camera, personal computer, telecommunication controller, CRT monitor, and raster printer for use in an office information system. Also, U.S. Patent No. 4,348,739 to Deaver et al, which discloses a terminal for connection to a data communication system for supplying data to an output printer or display. And, there are disclosures in the prior art to controllers for image processors such as U.S. Patent No. 4,811,052 to Yamakawa et al which discloses a control device for an imaging processing apparatus using a plurality of operation control units coupled to a central processing unit.

Absent in the prior art are disclosures of an architecture which enables discrete reprographic architectures to be created without substantial change or modification in the basic or core system. An object of the present invention is to provide such an architecture.

Accordingly, the present invention provides a core reprographics architecture for creating electronic image processing systems of the type which process image data in response to job programming instructions from an operator, characterised by a core processor for controlling system operation in response to operating instructions said operating instructions including said job programming instructions and system control data, a source of system control data for input to said core processor to enable said core processor to control operation of said system and carry out jobs in accordance with said job programming instructions, a source of said image data for input to said core processor for processing in accordance with said job programming instructions, a user interface enabling establishment of an operator dialog with said system, said operator dialog including said job programming instructions, said user interface including an electronic display for displaying said operator dialog and said image data to said operator, and a system file for storing said system operating instructions, said image data, and said operator dialog.

In one embodiment there is provided an architecture for an electronic image processing system for processing image signals to provide prints, characterised by a source of image signals, a user interface for establishing an operator dialog with said system, said operator dialog including printing instructions for print jobs, said user interface including an electronic display for displaying printing selections, a printer for producing prints from said image signals in accordance with said printing instructions for print jobs, a system file for holding said image signals and said printing instructions pending printing of said print jobs by said printer, a print queue of print jobs to be printed by said printer, said print queue accessing said system file for the image signals and printing instructions for each print job in said print queue in the order in which said print jobs are arranged in said print queue for printing, said system file and print queue enabling said printer to produce prints of previously input print jobs without waiting while image signals and printing instructions are input.

The present invention will be described further, by way of example, with reference to the accompanying drawings, in which:-

Figure 1 is a schematic block diagram showing the core system reprographics architecture according to an embodiment of the present invention;

Figure 2 is a schematic block diagram showing a full featured distributed reprographics architecture based on the core architecture shown in Figure 1;

Figure 3 is a schematic block diagram showing a stand alone reprographics printer architecture based on the core architecture shown in Figure 1;

Figure 4 is a schematic block diagram showing a distributed network server architecture based on the core architecture shown in Figure 1 for sending image files to a network; and

Figure 5 is a schematic block diagram showing a distributed network print server architecture based on the core architecture shown in Figure 1 for receiving image files from a network.

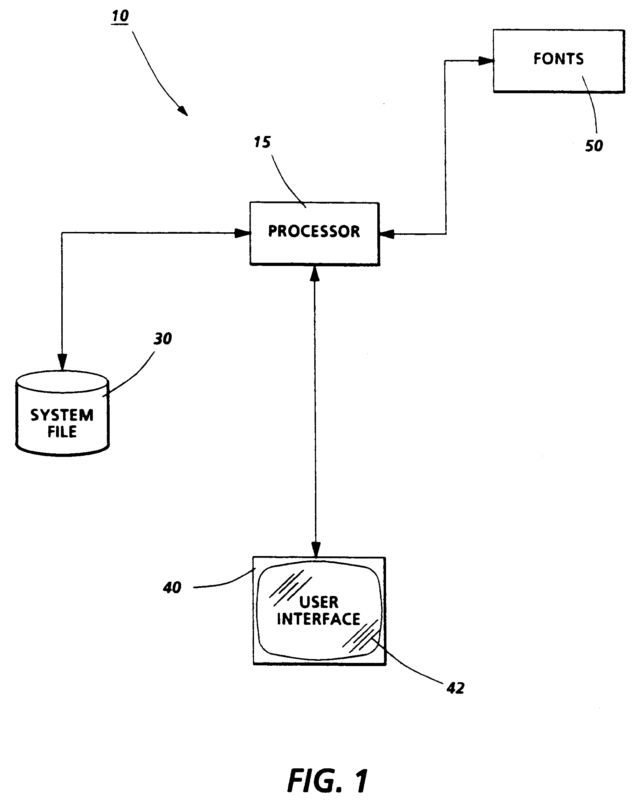

Referring to Figure 1, there is shown the basic or core system reprographics architecture, designated generally by the numeral 10, according to an embodiment of the present invention, Core system 10 comprises a core processor 15, a system file 30, a User Interface (UI) 40, and a font source 50.

Core processor 15 controls system operation in response to operator job programming instructions. The operating system software for this is stored in system file 30 together with other software programs for monitoring system operation, diagnosing system faults, etc. Image files which contain image data to be processed are stored in system file 30 also. Processor 15 also performs selected composition services such as signature creation, collation, make ready, etc. when programmed by the operator.

System file comprises any suitable memory such as disk memory for storing the operating system software, job dialog, system files, and other data.

UI 40 provides a user or operator interface for establishing an operator dialog with system 10. UI 40 includes an interactive touchscreen 42 together with a mouse and keyboard (not shown) that enables an operator dialog with the system. The dialog includes job programming instructions, system operating instructions and adjustments, etc. input by the operator to the system, and system operating information and data, instructions, diagnostic information etc. output by the system to the operator. Touchscreen 42 facilitates creation of the operator dialog by displaying through pictorial and text displays programming choices and selections, system faults and fault clearing instructions and procedures, etc. Additionally, images from the image files stored in system file 30 may be displayed on screen 42, enabling the operator to visually inspect and observe the images, while making programming selections. The operator dialog is stored in system file 30.

Font source 50 provides various print fonts, forms, logos, etc. for selection by the operator.

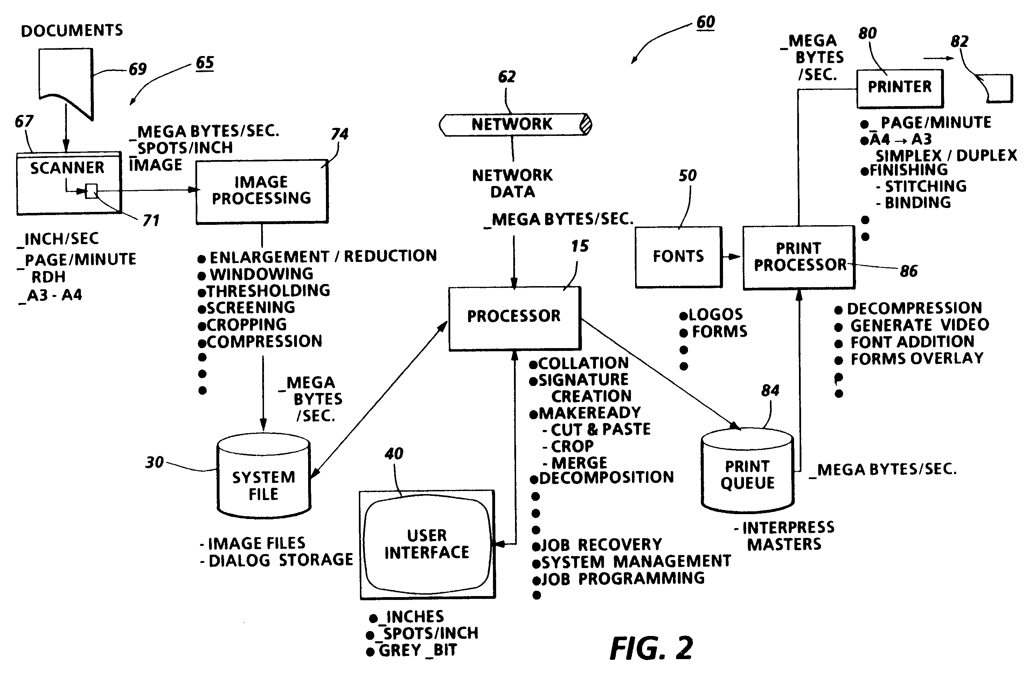

Referring to Figure 2, where like numbers refer to like parts, there is shown a full featured distributed reprographics architecture or system 60 based on core system 10 having both printer and network capabilities. In this embodiment, processor 15 is interfaced with an external network through a suitable communication channel 62. Channel 62 enables image data, instructions, etc. to be input to the system 60 for processing from external sources on the net and allows system 60 to output image data, instructions, etc. to the network.

System 60 has a second source of imaging data in the form of document scanner 65. Scanner 65 has a platen 67 on which documents 69 to be scanned are located for scanning by one or more linear arrays 71 which provide analog image signals representative of the scanned image. The image signals are output to an image processor 74 where the image signals are converted to binary image data for compression and storage in system file 30. Image processor 74 provides additional image composition selections such as cropping, screening, windowing, etc., which are carried out in real time, while the document remains in place on platen 67 of scanner 65. This enables the document to be re-scanned as necessary during processing and after the image composition selection(s) are completed for compression and storage of the image data in system file 30.

System 60 has a laser type printer 80 for producing prints from the image files on a suitable print media 82. Each job to be printed is arranged in a preset printing priority in a print queue 84. As each job reaches the top of queue 84, the image file data necessary to produce the prints is transferred to a print processor 86 where the data is de-compressed, fonts, forms, etc. from font source 50 added, and video signals provided for use by printer 80 in making prints.

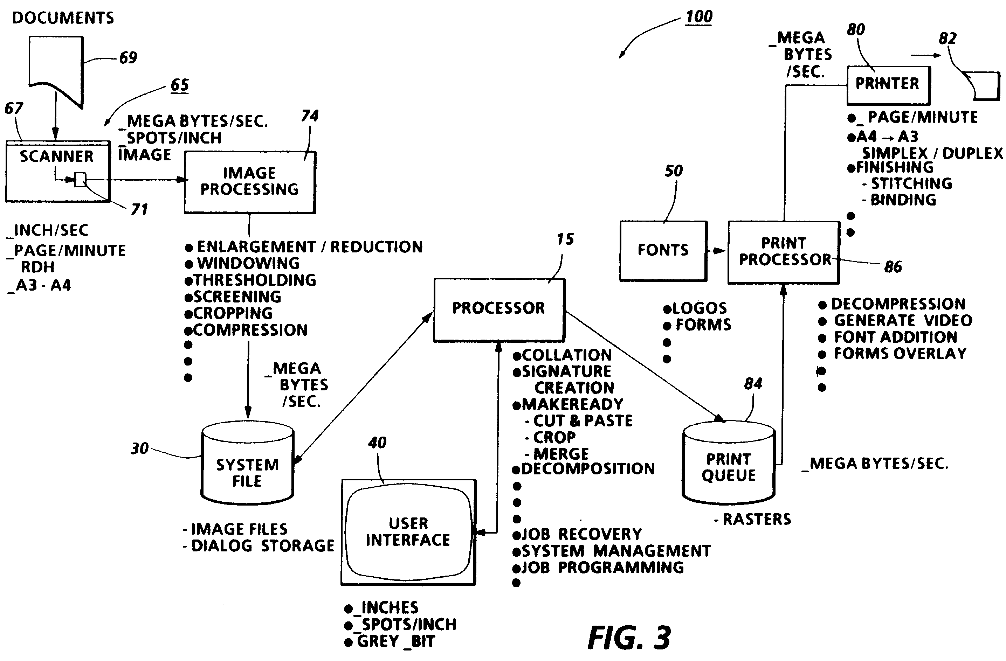

In Figure 3, where like numbers refer to like parts, a less featured system reprographic architecture 100 based on core system 10 is shown. In this system, network communication channel 62 is dispensed with, and as a result, system 100 becomes essentially a stand alone electronic printer receiving image data from scanner 65 and passing the data to printer 80 for printing on print media 82.

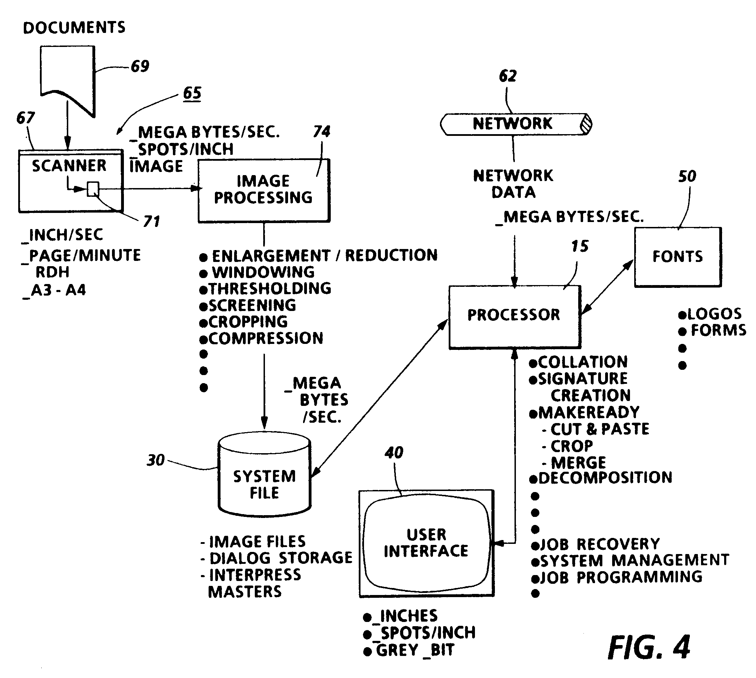

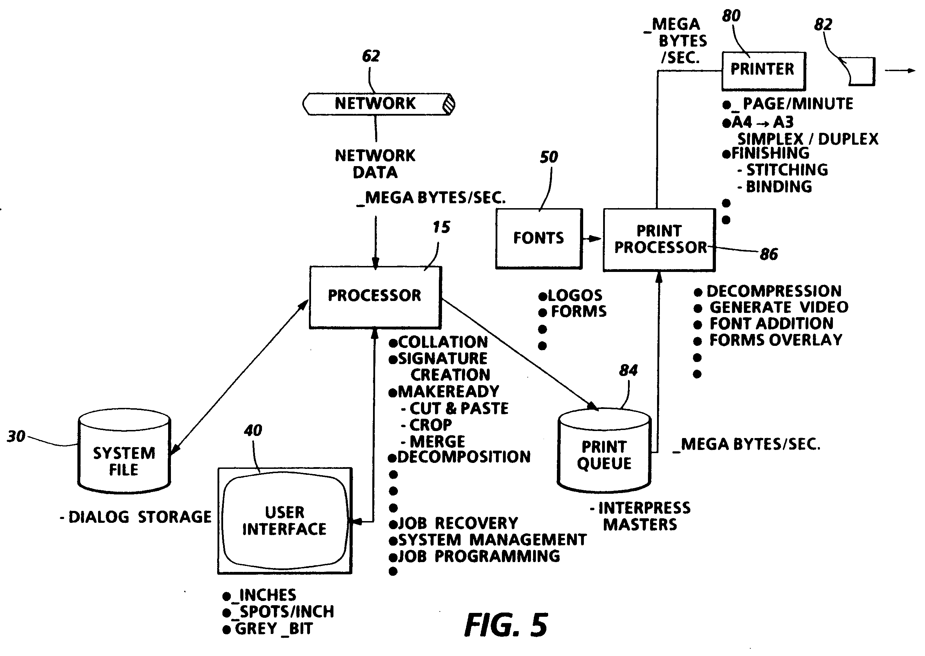

In Figures 4 and 5, where like numbers refer to like parts, distributed network server and print server architectures 110, 120 respectively based on core system 10 are shown. Distributed network server 110 scans documents, performs composition services such as make ready, converts the image data to the required format, and makes the resulting images available for distribution to the network via communication channel 62.

Print server 120 receives image data from the network via communication channel 62, converts the image data to the required format for printing, performs composition services such as make ready, and makes prints on print media 82.

While various reprographic architectures based on the core reprographic architecture are shown and described, other reprographic architectures may be envisioned. Further, document scanner 65 may comprise any suitable manual or automatic type scanner while printer types other than laser, as for example ink jet, may be envisioned.

The present invention provides a system reprographic architecture which in operation is more productive than light/lens systems. This architecture enables and takes advantage of the versatility of an electronic structure to run at the speed of a photon coupled structure in a light/lens. As a result, the invention obtains certain basic advantages not realized by light/lens systems such as:

(1) Productivity: Because of the structure of system file 30 and print queue 84, the system is not required to wait for information to arrive before printing can occur. As a result, the system runs faster at the job level than light lens systems.

(2) Electronic Precollation: Because the documents are sourced only once into system file 30, reproduction takes place then out of the system file electronically rather through the document handler of light lens systems. This makes the system more reliable, quieter, etc.

(3) Electronic Cut and Paste, etc.: Since the images are rendered to an electronic form, the image processing section can perform operations that are impossible in light lens systems. Further, the speed of the system leads to and allows operations that are referred to in offset as image setting direct to press. In offset operations, to obtain the quality that the system of the present invention provides, many operations such as camera work, screening, cut paste, make up, etc. are required before a plate can be made. The present invention in contrast can do image setting direct to the press.

(4) Because the electronics knows so much about the sequence of imaging and can change the page order, duplex can be facilitated without a staging (i.e., buffer or duplex) tray. The elimination of requirements for a staging tray is accomplished because the system computer can predict any race track (i.e., loop number) of documents, the arrival of the second side requirement, and intersperse second side imaging with first side imaging. An ancillary benefit of this type of duplexing is that even for small sheets, purging in the event of a problem does not require purging of an entire tray content but only the race track content which typically numbers only a very few sheets.

(5) The present system also facilitates doing a variety of special duplexing operations such as signature making which previously were impossible or very difficult and cumbersome to do in light/lens systems.

While the invention has been described with reference to the structure disclosed, it is not confined to the details set forth, but is intended to cover such modifications or changes as may come within the scope of the following claims.

## Claims

1. A core reprographics architecture (10) for creating electronic image processing systems of the type which process image data in response to job programming instructions from an operator, characterised by a core processor (15) for controlling system operation in response to operating instructions, said operating instructions including said job programming instructions and system control data, a source of system control data for input to said core processor (15) to enable said core processor (15) to control operation of said system and carry out jobs in accordance with said job programming instructions, a source (62, 65) of said image data for input to said core processor (15) for processing in accordance with said job programming instructions, a user interface (40) enabling establishment of an operator dialog with said system, said operator dialog including said job programming instructions, said user interface (40) including an electronic display (42) for displaying said operator dialog and said image data to said operator, and a system file (30) for storing said system operating instructions, said image data, and said operator dialog.

2. An architecture as claimed in claim 1, characterised in that said image signal source means (62, 65) includes an external communication channel (62) and/or a document scanner (65) for scanning documents (69) and converting the image content of the documents (69) scanned to image data.

3. An architecture as claimed in claim 2, characterised in that said scanner (65) is coupled to an image processor (74) for processing image data output by said scanner (65) whereby processor image data are output by said image processor (74) to said system file (30) for storing.

4. An architecture as claimed in any one of claims 1 to 3, characterised by an electronic printer (80) for producing prints on a print media (82) from image data in accordance with said job programming instructions.

5. An architecture as claimed in claim 4, characterised by a print processor (86) for processing image data in accordance with said job programming instructions to provide print signals, said print signals being output to said printer (80) for making said prints.

6. An architecture as claimed in claim 5, characterised by a print queue (84) coupled between said core processor (15) and said print processor (86), said print queue (84) arranging image data in a predetermined printing order for printing by said printer (80), said system file (30) and said print queue (84) cooperating to enable said printer (80) to produce prints without waiting for image sig-

**EP 0 478 334 A2**

nals and job programming instructions to be input.

7. An architecture (10) for an electronic image processing system for processing image signals to provide prints, characterised by a source (62, 65) of image signals, a user interface (40) for establishing an operator dialog with said system, said operator dialog including printing instructions for print jobs, said user interface (40) including an electronic display for displaying printing selections, a printer (80) for producing prints from said image signals in accordance with said printing instructions for print jobs, a system file (30) for holding said image signals and said printing instructions pending printing of said print jobs by said printer (80), a print queue (84) of print jobs to be printed by said printer (80), said print queue (84) accessing said system file for the image signals and printing instructions for each print job in said print queue (84) in the order in which said print jobs are arranged in said print queue (84) for printing, said system file (30) and print queue (84) enabling said printer (80) to produce prints of previously input print jobs without waiting while image signals and printing instructions are input.

8. An architecture as claimed in claim 7, characterised in that said system file (30) enables prints to be repeated without the need to re-input image signals from said source (62, 65).

9. An architecture as claimed in claim 7 or claim 8, characterised in that said image signal source (62, 65) includes a document scanner (65) for scanning document originals (69) and converting the image content of said document originals (69) to image signals for input to said system file (30), said system file (30) enabling prints to be repeated without requiring rescanning of the document originals by said document scanner (65).

10. An architecture as claimed in claim 9, characterised by a processor (74) for selectively manipulating said image signals to provide special prints without the need to handle said document originals (69).

**FIG. 1**

**FIG. 2**

82

PRINTER 80
- PAGE/MINUTE
- A4 → A3
- SIMPLEX / DUPLEX
- FINISHING
  - STITCHING
  - BINDING

_MEGA _BYTES /SEC.

PRINT PROCESSOR 86
- DECOMPRESSION
- GENERATE VIDEO
- FONT ADDITION
- FORMS OVERLAY
- •

_MEGA BYTES/SEC.

FONTS 50
- LOGOS
- FORMS
- •

100

PRINT QUEUE 84
- RASTERS

PROCESSOR 15
- COLLATION
- SIGNATURE CREATION
- MAKEREADY
  - CUT & PASTE
  - CROP
  - MERGE
- DECOMPOSITION
- •
- JOB RECOVERY
- SYSTEM MANAGEMENT
- JOB PROGRAMMING

USER INTERFACE 40
- INCHES
- _SPOTS/INCH
- GREY_BIT

SYSTEM FILE 30
- IMAGE FILES
- DIALOG STORAGE

_MEGA _BYTES /SEC.

IMAGE PROCESSING 74
- ENLARGEMENT / REDUCTION
- WINDOWING
- THRESHOLDING
- SCREENING
- CROPPING
- COMPRESSION
- •

_MEGA BYTES/SEC.
_SPOTS/INCH
IMAGE 65

SCANNER 71
_INCH/SEC
_PAGE/MINUTE
RDH
_A3 - A4

DOCUMENTS 69

67

FIG. 3

DOCUMENTS

*69*

*65*

*67*

SCANNER

*71*

_INCH/SEC
_PAGE/MINUTE
  RDH
_A3 - A4

_MEGA BYTES/SEC.
_SPOTS/INCH
 IMAGE

*74*

IMAGE
PROCESSING

● ENLARGEMENT / REDUCTION
● WINDOWING
●THRESHOLDING
●SCREENING
●CROPPING
●COMPRESSION
●
●
●

_MEGA
BYTES
/SEC.

*30*

SYSTEM
FILE

- IMAGE FILES
- DIALOG STORAGE
- INTERPRESS
  MASTERS

*40*

USER
INTERFACE

●_INCHES
●_SPOTS/INCH
●_GREY _BIT

*62*

NETWORK

NETWORK
DATA

_MEGA BYTES/SEC.

*15*

PROCESSOR

*50*

FONTS

●LOGOS
● FORMS
●
●
●

●COLLATION
●SIGNATURE
  CREATION
●MAKEREADY
  - CUT & PASTE
  - CROP
  - MERGE
●DECOMPOSITION
●
●
●
●JOB RECOVERY
●SYSTEM MANAGEMENT
●JOB PROGRAMMING
●

*FIG. 4*

EP 0 478 334 A2

FIG. 5